# FASCICULE DE BREVET EUROPEEN

(11) **EP 2 514 243 B1**
(45) Date de publication et mention de la délivrance du brevet: **07.02.2018**
(21) Numéro de dépôt: 10809010.1
(22) Date de dépôt: 14.12.2010
(51) Int. Cl.: H04W 52/00

(54) **PROCEDE ET DISPOSITIF DE LIMITATION DE PUISSANCE DE TRANSMISSION D'UN EQUIPEMENT RADIO**
VERFAHREN UND VORRICHTUNG ZUR BEGRENZUNG DER ÜBERTRAGUNGSLEISTUNG EINER FUNKVORRICHTUNG
METHOD AND DEVICE FOR LIMITING THE TRANSMITTING POWER OF A RADIO DEVICE

(30) Priorité: 17.12.2009 FR 0959139
(43) Date de publication de la demande: 24.10.2012
(73) Titulaire: Orange, 75015 Paris (FR)
(72) Inventeur: KOUNTOURIS, Apostolos, F-38000 Grenoble (FR); PONS, Michel, F-38240 Meylan (FR); MISCOPEIN, Benoît, F-38000 Grenoble (FR); SCHWOERER, Jean, F-GRENOBLE 38000 (FR)
(74) Mandataire: Regimbeau
(86) Numéro de dépôt international: PCT/FR2010/052715
(87) Numéro de publication internationale: WO 2011/073567

(56) Documents cités:
- EP-A2- 1 011 208
- US-A1- 2004 029 605
- US-A1- 2007 155 441
- US-A1- 2009 122 739

## Description

La présente invention concerne un procédé et un dispositif de limitation de puissance de transmission d'un équipement radio. Elle s'applique, en particulier, au domaine des systèmes de radiocommunication mobile dans le cadre de « Green Communications » (ou « communications vertes ») et à celui des boîtiers d'accès à Internet qui comportent des passerelles Wifi (pour « wireless fidelity » ou fidélité sans fil).

Depuis quelques années des efforts considérables sont consacrés afin d'adresser de manière concrète la problématique de développement durable. Ceci a des répercutions directes dans les techniques industrielles qui se traduisent à la recherche de réduction des émissions de gaz carbonique et la réduction de l'empreinte écologique de tout dispositif et installation industrielle.

Dans le monde de télécommunications, le terme « Green Communications » est utilisé pour faire référence à ce type d'efforts qui concernent les divers réseaux de télécommunication et particulièrement les réseaux de radiocommunication mobile dans lesquels les dépenses énergétiques se traduisent aussi en partie par des émissions électromagnétiques. Beaucoup de travaux sont consacrés à l'optimisation énergétique des équipements d'infrastructure sous la responsabilité des opérateurs. Ces efforts d'optimisation énergétique s'étendent aux équipements radios des utilisateurs.

On connaît du document US2004/0029605, un terminal utilisateur adapté à communiquer via un réseau de radiocommunication mobile et comprenant un dispositif permettant à son utilisateur de régler une valeur de puissance maximale de transmission. Un inconvénient est que ce réglage peut entraîner des dysfonctionnements du terminal.

La présente invention vise à remédier à cet inconvénient.

A cet effet, selon un premier aspect, la présente invention vise un dispositif de limitation de puissance de transmission d'un équipement comportant un émetteur, tel que défini par la revendication 1. La mise en oeuvre de la présente invention donne des moyens techniques peu coûteux et facilement accessibles permettant aux utilisateurs de limiter la puissance d'émission de leurs équipements dotés d'une interface radio (par exemple, les terminaux de télécommunication mobile et les passerelles domestiques). L'information relative au niveau de connectivité qui en résulte, donne aux utilisateurs un retour sur l'effet de leur réglage ou d'un autre réglage possible, sur la qualité du lien radio et leur permet de l'ajuster de façon à garder leurs équipements fonctionnels.

Cette mise en oeuvre de l'invention permet aussi d'économiser l'énergie électrique, prolonger la durée de vie des équipements autonomes et limiter le rayonnement électromagnétique de ces équipements et donc les interférences qu'ils sont susceptibles de provoquer.

Selon des caractéristiques particulières, le dispositif objet de la présente invention comporte, en outre, un moyen de réception d'une information représentative d'une puissance d'émission requise, le moyen de limitation de puissance étant adapté à autoriser une puissance d'émission inférieure à la puissance requise.

Ainsi, le dispositif effectue une minoration systématique de la puissance d'émission requise par le réseau. Le réglage d'une valeur de limitation ne définit alors pas une limite de puissance d'émission absolue, mais une minoration systématique de la puissance d'émission requise par le système de contrôle de puissance du réseau.

Par exemple, le réglage d'une valeur de limitation représente une diminution de puissance émise, en décibels, et le moyen de limitation commande une puissance émise inférieure de cette valeur à la puissance requise. De la sorte, le mobile utilise toujours une puissance réduite par rapport à ce que le réseau demande, quelle que soit la puissance requise.

Selon des caractéristiques particulières, le dispositif objet de la présente invention comporte, en outre,_un moyen d'affichage d'une information représentative de la puissance radio maximale réglée par l'utilisateur.

Grâce à ces dispositions, on assiste l'utilisateur dans le réglage, par une information de retour lui rendant compte de la diminution de la puissance d'émission.

Selon des caractéristiques particulières, le moyen d'affichage comporte un voyant lumineux.

Par exemple ce voyant est une diode électroluminescente.

Selon des caractéristiques particulières, le moyen d'affichage comporte un moyen de contrôle d'une partie d'un écran du dispositif.

Par exemple, une icône sur l'écran d'un téléphone mobile représente l'enclenchement de la limitation et, éventuellement, le niveau maximal imposé par cette limitation.

Selon des caractéristiques particulières, le moyen d'estimation d'information relative à un niveau de connectivité associé à une valeur de limitation de puissance est adapté à estimer un risque de perte de communication et le moyen d'affichage est adapté à afficher une information représentative de ce risque.

Grâce à ces dispositions, l'utilisateur peut décider d'autoriser une puissance maximale supérieure lorsque le risque de perte de communication augmente.

Selon des caractéristiques particulières, le dispositif comporte un moyen d'estimation d'une capacité de réduction potentielle de la puissance émise et le moyen d'affichage est adapté à afficher une information représentative de cette capacité de réduction.

Grâce à ces dispositions, l'utilisateur peut décider de réduire la puissance maximale lorsqu'il constate une capacité de réduction de cette puissance maximale.

Selon des caractéristiques particulières, le dispositif comporte un moyen d'estimation d'un gain de ressource et/ou d'une réduction de nuisance liées à une réduction de la puissance émise et le moyen d'affichage est adapté à afficher une information représentative de ce gain de ressource et/ou de cette réduction de nuisance.

Grâce à ces dispositions, l'utilisateur peut décider de réduire la puissance maximale lorsqu'il constate qu'un gain de ressource, par exemple une réduction de l'énergie électrique consommée ou une augmentation de la durée de fonctionnement résiduelle, ou une réduction de nuisance peut en être attendu.

Selon des caractéristiques particulières, le moyen de réglage est une fonction affichée sur un écran du dispositif et, sur sélection par l'utilisateur, commandée par un microprocesseur.

La sélection par l'utilisateur peut être effectuée par un clavier du dispositif, un dispositif de pointage ou un écran tactile, par exemple.

Selon des caractéristiques particulières, le moyen de réglage est un commutateur dont une position impose une limitation de puissance émise et l'autre position ne l'impose pas.

Selon des caractéristiques particulières, le moyen de réglage est un commutateur qui commande la puissance émise par paliers.

Selon des caractéristiques particulières, le moyen de limitation de puissance émise par l'émetteur comporte un composant « limitateur » ou réducteur, analogique ou numérique, qui intervient au niveau d'un amplificateur de puissance de l'émetteur.

Selon des caractéristiques particulières, le moyen de limitation de puissance émise par l'émetteur est adapté à fixer une valeur maximum de puissance émise.

Selon des caractéristiques particulières, le moyen de limitation de puissance émise par l'émetteur est adapté à réduire de la même proportion tous les niveaux de puissance commandés par d'autres composants du dispositif.

Selon un deuxième aspect, la présente invention vise un procédé de limitation de puissance de transmission d'un équipement comportant un émetteur, tel que défini par la revendication indépendante 9. Selon un troisième aspect, la présente invention vise un programme d'ordinateur chargeable dans un système informatique, ledit programme contenant des instructions permettant la mise en oeuvre du procédé objet de la présente invention, tel que succinctement exposé ci-dessus.

Selon un quatrième aspect, la présente invention vise un support d'informations lisibles par un ordinateur ou un microprocesseur, amovible ou non, conservant des instructions d'un programme informatique, caractérisé en ce qu'il permet la mise en oeuvre du procédé objet de la présente invention, tel que succinctement exposé ci-dessus.

Les avantages, buts et caractéristiques de ce dispositif, de ce programme d'ordinateur et de ce support d'information étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés, dans lesquels :
- la figure 1 représente, schématiquement, un premier mode de réalisation du dispositif objet de la présente invention,
- la figure 2 représente, schématiquement, une interface utilisateur d'un deuxième mode de réalisation du dispositif objet de la présente invention,
- les figures 3 et 4 représentent, schématiquement, des composants électroniques de modes de réalisation du dispositif objet de la présente invention et
- la figure 5 représente, sous forme d'un logigramme, des étapes d'un mode de réalisation particulier du procédé objet de la présente invention.

On note que les figures ne sont pas à l'échelle. Les figures représentent principalement des applications de la présente invention à des boîtiers de connexion à Internet muni d'émetteurs radio ou à des téléphones mobiles. Cependant, la présente invention ne se limite pas à ces types de dispositifs mais s'étend, au contraire, à tous les dispositifs grand public munis d'un émetteur radio, par exemple des ordinateurs portables muni de moyens de communication WiFi.

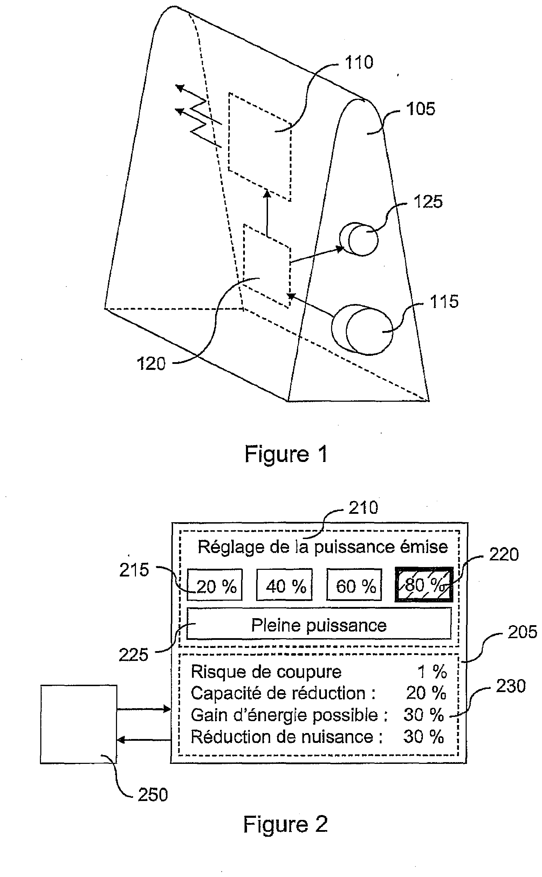

On observe, en figure 1, un boîtier de connexion 105 comportant un émetteur radio 110, un moyen de réglage accessible à un utilisateur 115, un moyen de limitation 120 de la puissance émise par l'émetteur radio 110 en fonction du réglage choisi par l'utilisateur et un moyen d'affichage 125 d'une information représentative de la puissance radio maximale réglée par l'utilisateur.

Le boîtier de connexion 105 est, par exemple un boîtier d'accès à Internet, aussi connu sous le nom de « box ». L'émetteur radio 110 est, par exemple une passerelle WiFi. Le moyen de réglage 115 comporte, par exemple, un interrupteur, un commutateur ou un variateur.

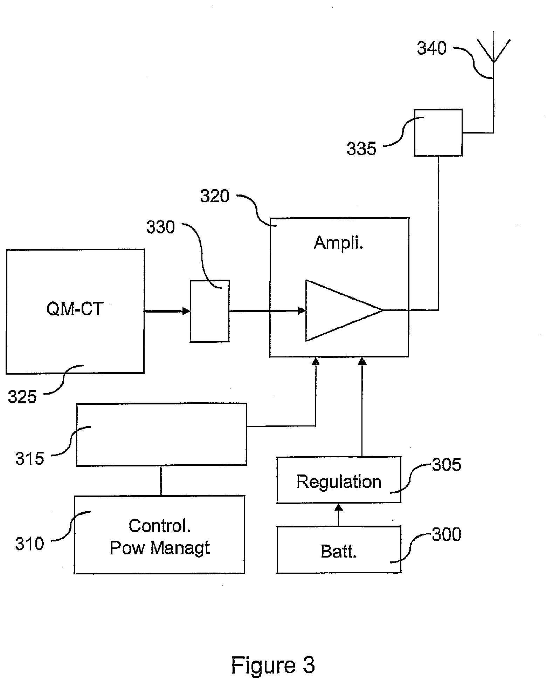

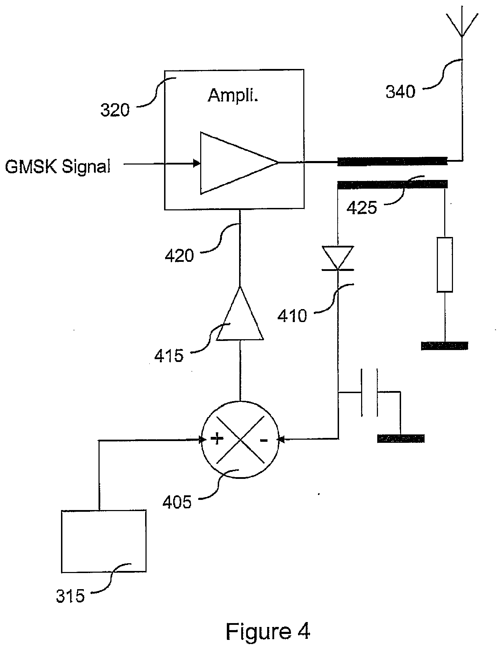

Le moyen de limitation 120 est un circuit, analogique ou numérique, dont des exemples sont donnés en regard des figures 3 et 4. Par exemple, ce moyen de limitation agit sur un amplificateur qui amplifie le signal appliqué à une antenne (non représentée), en fonction de la position du moyen de réglage 115. Le moyen d'affichage 125 est, dans ce mode de réalisation, un voyant lumineux qui peut prendre plusieurs couleurs selon la puissance radio maximale réglée par l'utilisateur et qui est commandé par le moyen de limitation 120. Ainsi, l'utilisateur peut, par simple commande manuelle sur le moyen de réglage 115, choisir d'appliquer une limitation de la puissance émise par l'émetteur radio 110 et, éventuellement, un niveau de limitation. En retour, l'utilisateur peut obtenir confirmation de la limitation appliquée par le moyen d'affichage 125. La limitation de puissance est réalisée par le moyen 120, de manière analogique ou numérique.

Ainsi, par exemple, un utilisateur dont un terminal communique par signaux radio avec le boîtier 105, terminal qui se trouve à quelques pas, dans la même pièce que le boîtier 105, peut choisir de réduire la puissance radio de l'émetteur sans risque de perte de communication ou de diminution de la qualité de cette communication.

On observe, en figure 2, un écran 205 formant interface utilisateur à la fois pour que l'utilisateur puisse régler la limitation de la puissance émise par un émetteur radio et pour afficher à l'utilisateur différents messages dont la limitation de puissance radio qu'il a choisie et une information relative à un niveau de connectivité associé à une valeur de limitation de puissance.

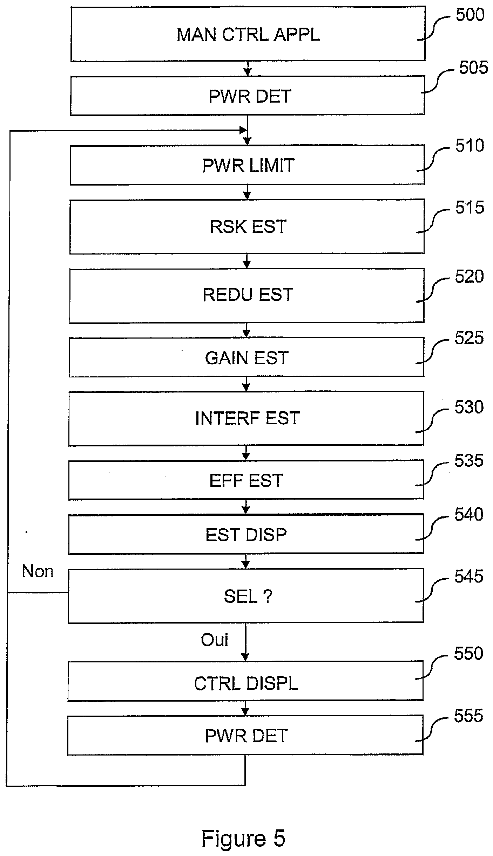

Un microprocesseur 250 commande l'affichage sur l'écran 205 et reçoit des consignes, notamment de limitation de puissance, de la part de l'utilisateur. Le microprocesseur met en oeuvre un programme d'ordinateur chargeable dans le système informatique que représente l'équipement de l'utilisateur, ce programme contenant des instructions permettant la mise en oeuvre du procédé objet de la présente invention, par exemple en implémentant les étapes illustrées en figure 5. Ce programme est conservé sur un support, amovible ou non, d'informations lisibles par un microprocesseur, par exemple une mémoire vive ou morte ou une carte à microcircuit.

L'écran 205 est un écran, éventuellement tactile, de terminal portable, tel qu'un téléphone mobile, un smartphone, un assistant personnel numérique muni de fonctions de radiocommunication ou un ordinateur portable muni de fonctions de radiocommunication.

Le contenu affiché sur l'écran 205 comporte une zone 210 de réglage de la limitation de puissance émise et une zone 230 d'information de l'utilisateur. La zone de réglage 210 comporte un titre et des choix de proportion de la puissance maximale à sélectionner. Par exemple, sur l'écran illustré en figure 2, les choix se trouvent représentés par des pourcentages sur des zones rectangulaires 215 à 220 et par un choix de pleine puissance sur un zone rectangulaire 225. Le choix précédemment effectué par l'utilisateur, ici « 80 % » est repéré par un cadre plus épais et une couleur (illustrée par des hachures, en figure 2) de la zone 220 portant ce choix.

On observe que, selon les modes de réalisation, ce pourcentage définit la puissance maximale émise, par rapport à la puissance maximale que l'équipement peut émettre ou la puissance émise par rapport à la puissance requise par l'équipement ou par un appareil tiers, tel que la station de base du réseau sur lequel l'équipement-communique.

La zone d'information 230 possède un contenu qui fournit des informations représentatives :
- d'un risque estimé de perte de communication avec la limitation de puissance déjà choisie,
- d'une capacité estimée de réduction potentielle de la puissance émise, qui pourrait être choisie par l'utilisateur sans augmentation sensible du risque de perte de communication,
- d'une estimation d'un gain de ressource si cette réduction potentielle était choisie par l'utilisateur et/ou
- d'une réduction de nuisance si cette réduction potentielle était choisie par l'utilisateur.

Ces informations sont obtenues par traitement des signaux reçus par l'émetteur/récepteur radio et/ou en fonction d'abaques pré-mémorisés. Une fonctionnalité logicielle optionnelle permet de suggérer à l'utilisateur quand le dispositif pourrait être mis en marche/arrêt et de lui fournir des informations détaillées sur l'économie énergétique réalisée.

Si la limitation de puissance radio émise est enclenchée, un voyant sur le terminal (une diode ou une icône sur l'écran) le signale. Eventuellement l'utilisateur peut se renseigner sur l'économie réalisée au niveau de la batterie en consultant un menu ou par un changement de couleur du voyant.

Ainsi, préférentiellement, même quand l'utilisateur n'accède pas à l'interface de commande de limitation de puissance radio émise illustrée en figure 2, une icône indique, sur l'écran 205, si cette limitation est enclenchée. L'utilisateur peut ainsi plus facilement se souvenir qu'il a enclenché cette fonction de limitation.

Par exemple, lorsque la fonction de limitation n'est pas enclenchée, l'indicateur visuel (diode ou icône) est éteint (ou grisé). Lorsque la fonction de limitation est enclenchée, l'indicateur visuel est allumé. Si la fonction de limitation est efficace, l'indicateur visuel est vert. Si la fonction de limitation n'est pas efficace, l'indicateur visuel est vert clignotant. Si la limitation de puissance met en danger la communication, l'indicateur visuel est orange.

L'efficacité du dispositif est définie de la manière suivante : la limitation de puissance d'émission est inférieure à la puissance nominale et le lien radio continue à exister dans des conditions acceptables. Dans le cas d'un système avec régulation de la puissance d'émission (typiquement, un téléphone cellulaire) cette information peut être déduite des commandes d'augmentation ou réduction de puissance par interception des signaux en entrée du convertisseur numérique-analogique, par exemple.

La mise en danger du lien radio peut être obtenue très facilement avec un système sans régulation de puissance. Dans le cas d'un réseau local sans fil type Wifi, le point d'accès peut constituer des statistiques de connectivité réseau avec les terminaux qu'il a sous sa couverture (par exemple, des opérations d'interrogation de réseau connues sous le nom de « ping » et extraction du taux de succès de ces opérations).

Concernant le moyen de limitation de la puissance émise, il peut prendre la forme d'un moyen de contrôle d'un amplificateur de puissance de l'émetteur radio. Dans les figures 3 et 4, il s'agit d'un mécanisme de limitation de la puissance moyenne émise qui consiste en un composant (le « limitateur » ou le réducteur), analogique ou numérique, qui intervient au niveau de l'amplificateur de puissance de l'émetteur radio. On peut envisager la possibilité de spécifier comme limite :
- soit un maximum absolu autorisé par le moyen de réglage ou
- un pourcentage, ou maximum relatif, de la puissance cible prescrite par la mise en oeuvre du protocole de communication sur le réseau, au terminal incorporant le dispositif.

En particulier, dans le cas où le réseau requiert un niveau de puissance au terminal, le réglage permis par la mise en oeuvre de la présente invention peut consister à définir une minoration systématique, d'un certain pourcentage par exemple, par rapport à ce niveau requis.

Pour la mise en oeuvre pratique de la limitation de puissance, on peut :
- ouvrir la boucle de régulation de puissance, donc ne pas prendre en compte du tout l'information renvoyée par le réseau (par exemple liée aux objectifs de qualité de service) et faire en sorte que l'utilisateur ait un contrôle total de la puissance émise ;
- conserver la boucle de régulation et ne prélever qu'une fraction de la tension de contrôle de la commande de puissance. Dans ce cas, on continue à utiliser l'information renvoyée par le réseau mais l'utilisateur a la possibilité de réduire la puissance émise à partir d'un niveau qui correspond à une optimisation de la qualité de service ou
- faire en sorte que l'utilisateur mette une butée réglable (et non pas un diviseur réglable) sur la tension de contrôle de la commande de puissance de manière à ce que la puissance émise ne dépasse pas un certain seuil. On utilise alors encore l'information renvoyée par le réseau et on la respecte jusqu'au niveau de butée.

La première possibilité énoncée ci-dessus est préférablement appliquée aux boîtiers d'accès utilisant une communication Wifi. Dans le cas de la téléphonie cellulaire, les deux dernières possibilités sont préférables pour les équipements disposant d'un moyen de réception d'une information représentative d'une puissance d'émission requise par le réseau de radiocommunication. Le microprocesseur 250 illustré en figure 2 est un exemple d'un tel moyen, en association avec les moyens de réception de signaux radio de l'équipement. Le moyen de limitation de puissance autorise alors une puissance d'émission inférieure à la puissance requise.

Par exemple, le réglage d'une valeur de limitation représente une diminution de puissance émise, en décibels, et le moyen de limitation commande une puissance émise inférieure de cette valeur à la puissance requise. De la sorte, le mobile utilise toujours une puissance réduite par rapport à ce que le réseau demande, quelle que soit la puissance requise.

L'ampleur de cette réduction, et donc son impact sur la qualité de service, reposent alors uniquement sur le réglage effectué par l'utilisateur.

On cite, ci-dessous, trois modes de réalisation possibles. Le premier consiste à réguler la puissance par le contrôle de la polarisation de transistors de l'amplificateur de puissance. Dans ce premier mode de réalisation, la réduction ou la limitation de la puissance est obtenue par le contrôle de la tension de polarisation des transistors (courant de base pour des transistors bipolaires ou tension de grille pour des transistors à effet de champs, ou FET). Par exemple, l'insertion d'un potentiomètre entre la sortie d'un convertisseur numérique-analogique et l'entrée de commande de puissance de l'amplificateur de puissance permet de jouer manuellement sur la tension de commande en ne prélevant qu'une fraction de la tension de sortie du convertisseur. On obtient ainsi un réducteur de la puissance radio maximale émise. L'étalonnage en puissance est possible connaissant la courbe puissance fonction de la tension de contrôle des documents de spécification (« data sheets ») ou en faisant des mesures.

Le second mode de réalisation du moyen de limitation consiste à modifier des flux binaires au niveau du convertisseur numérique-analogique qui génère la tension de référence utilisée par le dispositif de réglage de l'alimentation de l'amplificateur de puissance. La limitation de puissance est obtenue par la modification des mots binaires dans le convertisseur, par exemple en soustrayant un mot binaire correspondant au nombre de décibels désirés. Dans le cas où l'on aurait accès à un lien parallèle, on peut effectuer cette modification de manière analogique. Dans le cas d'une liaison série, une programmation réalise cette modification de manière numérique.

Le troisième mode de réalisation du moyen de limitation consiste à agir directement sur la tension d'alimentation de l'amplificateur de puissance. Dans ce mode de réalisation, la réduction ou la limitation de puissance est obtenue par le contrôle de la puissance par la commande de la tension d'alimentation des transistors de l'amplificateur (tension de collecteur ou tension de drain). On note qu'il est alors intéressant de jouer sur le contrôle d'un convertisseur tension-tension à fort rendement.

La figure 3 représente l'intégration du moyen de limitation dans une partie d'un schéma fonctionnel d'un mobile GSM (« Global System for Mobile communication » pour système global pour communication mobile) ou UMTS (« Universal Mobile Telecommunication System » pour système de télécommunication mobile universel).

En figure 3, on observe que le moyen de limitation commandé de manière manuelle par l'utilisateur 315 se trouve entre le contrôleur - circuit de gestion de l'alimentation 310 et l'amplificateur de puissance 320 qui est, par ailleurs, alimenté par une batterie 300 muni d'un régulateur 305. Cet amplificateur de puissance 320 amplifie des signaux issus d'un composant 325 QM-CT de modulation en quadrature et transposition dans le canal utilisé par l'intermédiaire d'un module DCS (« Digital Cellular System » pour système cellulaire numérique) et transmet les signaux amplifiés à une antenne 335 et 340.

En figure 4, qui décrit la mesure de puissance et la boucle de régulation de puissance d'un mobile, on précise l'implantation du moyen de limitation 315 ainsi que le point d'application 420 de la tension de commande de l'amplificateur de puissance 320. Le signal de consigne de puissance TXP, qui dépend du choix effectué par l'utilisateur va sur l'entrée positive d'un comparateur 405. La sortie de ce comparateur 405 est amplifiée par un amplificateur 415 pour donner une tension de polarisation des transistors de l'amplificateur de puissance qui correspond à un facteur d'amplification appliqué par l'amplificateur de puissance 320 au signal GMSK. Ce signal a, en entrée de l'amplificateur de puissance 320, un niveau de E décibels. En sortie, le signal transmis à l'antenne 340 a un niveau de S decibel. Un coupleur 425 associé à un circuit redresseur 410 extrait un signal de tension continue de S - 20 décibels du signal de sortie de l'amplificateur de puissance 320. Ce signal est appliqué à l'entré négative du comparateur 405. Ainsi, la puissance émise par l'antenne 340 est asservie à la consigne de puissance.

Dans le cas d'une limitation numérique, par programmation, le moyen de limitation de puissance comporte un convertisseur numérique-analogique dont la sortie est directement commandée par le choix de l'utilisateur.

Comme on le comprend à la lecture de la description des figures 1 à 4, selon le mode de réalisation, le moyen de limitation de puissance peut être un potentiomètre classique ou un potentiomètre électronique si l'on choisit la fonction réducteur ou encore un écrêteur, si l'on choisit la fonction limiteur. Dans des modes de réalisation, on modifie, par exemple par programmation, le flux binaire entrant dans le convertisseur numérique-analogique.

La figure 5 illustre des étapes d'un mode de réalisation particulier du procédé objet de la présente invention, particulièrement adapté à mettre en oeuvre l'interface utilisateur illustrée en figure 2.

Au cours d'une étape 500 MAN CTRL APPL, l'utilisateur effectue le lancement d'une application de contrôle manuel de puissance radio émise. Par exemple, cet utilisateur sélectionne une icône qui la symbolise.

Au cours d'une étape 505 PWR DET, on détermine la limite de puissance à appliquer. Cette limite de puissance, absolue ou relative, comme exposé plus haut, est lue dans une mémoire qui conserve le dernier choix de limite effectué par l'utilisateur. Si aucun choix n'est conservé en mémoire, par défaut, aucune limitation de puissance n'est appliquée.

Au cours d'une étape 510 PWR LIMIT, on applique la limitation de puissance, comme exposé en regard des figures 2 à 4.

Au cours d'une étape 515 RSK EST, on détermine une estimation de risque de perte de communication. La mise en danger du lien radio peut être obtenue très facilement avec un système sans régulation de puissance. Dans le cas d'un réseau local sans fil type Wifi, le point d'accès peut constituer des statistiques de connectivité réseau avec les terminaux qu'il a sous sa couverture (par exemple, des opérations d'interrogation de réseau connues sous le nom de « ping » et extraction du taux de succès de ces opérations).

Au cours d'une étape 520 REDU EST, on détermine une estimation de la capacité de limitation résiduelle de la puissance émise. Par exemple, cette capacité de limitation supplémentaire est obtenue en fonction du risque estimé au cours de l'étape 515 RSK EST.

Au cours d'une étape 525 GAIN EST, on détermine une estimation d'un gain d'énergie lié à la limitation appliqué et/ou à la limitation résiduelle, en terme énergétique, par exemple en pourcentage d'économie énergétique, ou en termes de durée de vie de la batterie.

Au cours d'une étape 530 INTERF EST, on détermine une estimation d'une réduction de nuisance obtenue avec la limitation appliquée ou avec la limitation résiduelle, par exemple en termes de volume dans lequel l'émission est susceptible de provoquer des interférences.

Au cours d'une étape 535 EFF EST, on détermine l'efficacité de la limitation de puissance. L'efficacité du dispositif est définie de la manière suivante : la limitation de puissance d'émission est inférieure à la puissance nominale et le lien radio continue à exister dans des conditions acceptables. Dans le cas d'un système avec régulation de la puissance d'émission (typiquement, un téléphone cellulaire) cette information peut être déduite des commandes d'augmentation ou réduction de puissance par interception des signaux en entrée du convertisseur numérique-analogique, par exemple.

Au cours d'une étape 540 EST DISP, on effectue un affichage, par exemple sur une icône apparaissant par exemple sur la page d'accueil de l'équipement. Si la limitation de puissance radio émise est enclenchée, une icône sur l'écran le signale. Eventuellement l'utilisateur peut se renseigner sur l'économie réalisée au niveau de la batterie en observant, par exemple, un changement de couleur du voyant. Ainsi, même quand l'utilisateur n'accède pas à l'interface de commande de limitation de puissance radio émise, une icône indique si cette limitation est enclenchée. L'utilisateur peut ainsi plus facilement se souvenir qu'il a enclenché cette fonction de limitation. Par exemple, lorsque la fonction de limitation n'est pas enclenchée, l'indicateur visuel (diode ou icône) est éteint (ou grisé). Lorsque la fonction de limitation est enclenchée, l'indicateur visuel est allumé. Si la fonction de limitation est efficace, l'indicateur visuel est vert. Si la fonction de limitation n'est pas efficace, l'indicateur visuel est vert clignotant. Si la limitation de puissance met en danger la communication, l'indicateur visuel est orange.

Au cours d'une étape 545 SEL, on détermine si l'utilisateur a sélectionné l'interface de la fonction de contrôle manuel de la puissance, par exemple en sélectionnant l'icône affichée ou une icône apparaissant dans une arborescence de fonctions de l'équipement. Si non, on retourne à l'étape 510 PWR LIM. Si oui, au cours d'une étape 550 CTRL DISP, on affiche l'interface de contrôle de puissance, par exemple l'interface représentée en figure 2. On affiche ainsi, notamment des informations représentatives :
- d'un risque estimé de perte de communication avec la limitation de puissance déjà choisie,
- de l'efficacité de la limitation,
- d'une capacité estimée de réduction potentielle de la puissance émise, qui pourrait être choisie par l'utilisateur sans augmentation sensible du risque de perte de communication,
- d'une estimation d'un gain de ressource si cette réduction potentielle était choisie par l'utilisateur et/ou
- d'une réduction de nuisance si cette réduction potentielle était choisie par l'utilisateur.

Au cours d'une étape 555 PWR DET, on détermine la limitation de puissance choisie par l'utilisateur, en fonction de son interaction avec l'équipement. Puis, on retourne à l'étape 510 PWR LIM.

L'implémentation du procédé et du dispositif objets de la présente invention dans un équipement comportant un émetteur radio permet à son utilisateur de décider de limiter la puissance d'émission radio de cet équipement, tout en l'informant de l'impact de son choix :
- rallonger la durée de vie de la batterie,
- renoncer à la garantie de qualité de service,
- limiter les perturbations électromagnétiques,
- contribuer à une meilleur fonctionnalité de communication globale et
- limiter les risques d'intrusion par un tiers malveillant.

Du point de vue du constructeur de l'équipement, la mise en oeuvre de la présente invention est très simple car elle n'intervient pas dans la pile de protocoles de communication.

## Revendications

1. Dispositif de limitation de puissance de transmission d'un équipement comportant un émetteur radio (340), comportant :
- un moyen (115, 210 à 225) de réglage d'une valeur de limitation de puissance radio émise, accessible à un utilisateur et
- un moyen (120, 250, 310, 315, 405 à 425) de limitation de puissance émise par ledit émetteur radio en fonction de la valeur choisie par l'utilisateur ;
**caractérisé en ce qu'**il comporte en outre :
- un moyen (120, 250) d'estimation d'information relative à un niveau de connectivité associé à une valeur de limitation de puissance ;
- un moyen (125, 205, 230, 250) d'affichage de ladite information, et
- un moyen (120, 250) d'estimation d'une capacité de réduction potentielle de la puissance émise
et le moyen d'affichage (205, 230, 250) est adapté à afficher une information représentative de cette capacité de réduction.

2. Dispositif selon la revendication 1, qui comporte, en outre, un moyen (250) de réception d'une information représentative d'une puissance d'émission requise, le moyen de limitation de puissance étant adapté à autoriser une puissance d'émission inférieure à la puissance requise.

3. Dispositif selon l'une quelconque des revendications 1 ou 2, qui comporte, en outre, un moyen d'affichage (125, 205, 230, 250) d'une information représentative de la puissance radio maximale réglée par l'utilisateur.

4. Dispositif selon l'une quelconque des revendications 1 à 3, dans lequel le moyen (120, 250) d'estimation d'information relative à un niveau de connectivité associé à une valeur de limitation de puissance est adapté à estimer un risque de perte de communication et le moyen d'affichage (125, 205, 230, 250) est adapté à afficher une information représentative de ce risque.

5. Dispositif selon l'une quelconque des revendications 1 à 4, qui comporte un moyen (120, 250) d'estimation d'un gain de ressource et/ou d'une réduction de nuisance liées à une réduction de la puissance émise et le moyen d'affichage (205, 230, 250) est adapté à afficher une information représentative de ce gain de ressource et/ou de cette réduction de nuisance.

6. Dispositif selon l'une quelconque des revendications 1 à 5, dans lequel le moyen d'affichage (205, 230, 250) comporte un moyen (250) de contrôle d'une partie d'un écran du dispositif.

7. Dispositif selon l'une quelconque des revendications 1 à 6, dans lequel le moyen de réglage (210 à 225) est une fonction affichée sur un écran (205) du dispositif et, sur sélection par l'utilisateur, commandée par un microprocesseur (250).

8. Dispositif selon l'une quelconque des revendications 1 à 7, dans lequel le moyen (120, 250, 310, 315, 405 à 425) de limitation de puissance émise par l'émetteur comporte un composant (310, 315, 405 à 425) « limitateur » ou réducteur, analogique ou numérique, qui intervient au niveau d'un amplificateur de puissance (320) de l'émetteur (340).

9. Procédé de limitation de puissance de transmission d'un équipement comportant un émetteur radio comportant :
- une étape (550, 555) de réglage d'une valeur de limitation de puissance radio émise, accessible à un utilisateur et
- une étape (510) de limitation de puissance émise par ledit émetteur radio en fonction de la valeur choisie par l'utilisateur ;
**caractérisé en ce qu'**il comporte, en outre :
- une étape (515 à 535) d'estimation d'information relative à un niveau de connectivité associé à une valeur de limitation de puissance ;
- une étape (520) d'estimation de la capacité de limitation résiduelle de la puissance émise, et
- une étape (540) d'affichage desdites informations.

10. Programme d'ordinateur chargeable dans un système informatique, ledit programme contenant des instructions permettant la mise en oeuvre du procédé selon la revendication 9.

11. Support d'informations lisibles par un ordinateur ou un microprocesseur, amovible ou non, conservant des instructions d'un programme informatique, **caractérisé en ce qu'**il permet la mise en oeuvre du procédé selon la revendication 9.

## Patentansprüche

1. Vorrichtung zur Begrenzung der Übertragungsleistung einer Vorrichtung, die einen Funksender (340) aufweist, umfassend:
- ein Mittel (115, 210 bis 225) zum Einstellen eines Begrenzungswerts der gesendeten Funkleistung, das für einen Benutzer zugänglich ist, und
- ein Mittel (120, 250, 310, 315, 405 bis 425) zum Begrenzen der Leistung, die von dem Funksender gesendet wird, in Abhängigkeit von dem Wert, der von dem Benutzer gewählt wird,
**dadurch gekennzeichnet, dass** sie ferner Folgendes aufweist:
- ein Mittel (120, 250) zum Schätzen von einer Information in Bezug auf eine Konnektivitätsebene, die einem Leistungsbegrenzungswert zugeordnet ist,
- ein Mittel (125, 205, 230, 250) zum Anzeigen der Information und
- ein Mittel (120, 250) zum Schätzen von einer potentiellen Reduktionskapazität der gesendeten Leistung
und das Mittel zum Anzeigen (205, 230, 250) geeignet ist, eine Information anzuzeigen, die für diese Reduktionskapazität repräsentativ ist.

2. Vorrichtung nach Anspruch 1, die ferner ein Mittel (250) zum Empfangen von einer Information aufweist, die für eine erforderliche Sendeleistung repräsentativ ist, wobei das Mittel zum Begrenzen der Leistung geeignet ist, eine Sendeleistung zu genehmigen, die niedriger als die erforderliche Leistung ist.

3. Vorrichtung nach einem der Ansprüche 1 oder 2, die ferner ein Mittel zum Anzeigen (125, 205, 230, 250) von einer Information aufweist, die für die maximale Funkleistung repräsentativ ist, die von dem Benutzer eingestellt wird.

4. Vorrichtung nach einem der Ansprüche 1 bis 3, wobei das Mittel (120, 250) zum Schätzen von einer Information in Bezug auf eine Konnektivitätsebene, die einem Leistungsbegrenzungswert zugeordnet ist, geeignet ist, ein Risiko eines Kommunikationsverlusts einzuschätzen, und das Mittel zum Anzeigen (125, 205, 230, 250) geeignet ist, eine Information anzuzeigen, die für dieses Risiko repräsentativ ist.

5. Vorrichtung nach einem der Ansprüche 1 bis 4, die ein Mittel (120, 250) zum Schätzen eines Ressourcengewinns und/oder einer Störungsreduktion, die mit einer Reduzierung der gesendeten Leistung verbunden sind, aufweist und das Mittel zum Anzeigen (205, 230, 250) geeignet ist, eine Information anzuzeigen, die für diesen Ressourcengewinn und/oder diese Störungsreduktion repräsentativ ist.

6. Vorrichtung nach einem der Ansprüche 1 bis 5, wobei das Mittel zum Anzeigen (205, 230, 250) ein Mittel (250) zum Kontrollieren eines Teils eines Bildschirms der Vorrichtung aufweist.

7. Vorrichtung nach einem der Ansprüche 1 bis 6, wobei das Mittel zum Einstellen (210 bis 225) eine Funktion ist, die auf einem Bildschirm (205) der Vorrichtung angezeigt wird und bei Auswahl durch den Benutzer durch einen Mikroprozessor (250) gesteuert wird.

8. Vorrichtung nach einem der Ansprüche 1 bis 7, wobei das Mittel (120, 250, 310, 315, 405 bis 425) zum Begrenzen der Leistung, die von dem Funksender gesendet wird, eine analoge oder digitale, "begrenzende" oder reduzierende Komponente (310, 315, 405 bis 425) aufweist, die auf Ebene eines Leistungsverstärkers (320) des Senders (340) eingreift.

9. Verfahren zur Begrenzung der Übertragungsleistung einer Vorrichtung, die einen Funksender aufweist, umfassend:
- einen Schritt (550, 555) zum Einstellen eines Begrenzungswerts der gesendeten Funkleistung, der für einen Benutzer zugänglich ist, und
- einen Schritt (510) zum Begrenzen der Leistung, die von dem Funksender gesendet wird, in Abhängigkeit von dem Wert, der von dem Benutzer gewählt wird,
**dadurch gekennzeichnet, dass** es ferner Folgendes aufweist:
- einen Schritt (515 bis 535) zum Schätzen von einer Information in Bezug auf eine Konnektivitätsebene, die einem Leistungsbegrenzungswert zugeordnet wird,
- einen Schritt (520) zum Schätzen der residualen Begrenzungskapazität der gesendeten Leistung und
- einen Schritt (540) zum Anzeigen der Informationen.

10. Computerprogramm, das in ein Computersystem ladbar ist, wobei das Programm Anweisungen aufweist, die das Umsetzen des Verfahrens nach Anspruch 9 ermöglichen.

11. Träger von Informationen, die von einem Computer oder einem Mikroprozessor lesbar sind, der abnehmbar oder nicht abnehmbar ist, der die Anweisungen eines Computerprogramms aufbewahrt, **dadurch gekennzeichnet, dass** er das Umsetzen des Verfahrens nach Anspruch 9 ermöglicht.

## Claims

1. Device for limiting transmission power of an equipment item comprising a radio transmitter (340), comprising:
- a means (115, 210 to 225) for setting a limiting value of radio power transmitted, accessible to a user and
- a means (120, 250, 310, 315, 405 to 425) for limiting power transmitted by the said radio transmitter as a function of the value chosen by the user;
**characterized in that** it comprises, furthermore:
- a means (120, 250) for estimating an information item relating to a connectivity level associated with a power limiting value; and
- a means (125, 205, 230, 250) for displaying the said information item, and
- a means (120, 250) for estimating a potential capacity for reducing the transmitted power and the display means (205, 230, 250) is suitable for displaying an information item representative of this reduction capacity.

2. Device according to Claim 1, which comprises, furthermore, a means (250) for receiving an information item representative of a required transmission power, the power limiting means being suitable for authorizing a lower transmission power than the requested power.

3. Device according to any one of Claims 1 and 2, which comprises, furthermore, a means (125, 205, 230, 250) for displaying an information item representative of the maximum radio power set by the user.

4. Device according to any one of Claims 1 to 3, in which the means (120, 250) for estimating an information item relating to a connectivity level associated with a power limiting value is suitable for estimating a risk of communication loss and the display means (125, 205, 230, 250) is suitable for displaying an information item representative of this risk.

5. Device according to any one of Claims 1 to 4, which comprises a means (120, 250) for estimating a resource gain and/or nuisance reduction related to a reduction in the transmitted power and the display means (205, 230, 250) is suitable for displaying an information item representative of this resource gain and/or of this nuisance reduction.

6. Device according to any one of Claims 1 to 5, in which the display means (205, 230, 250) comprises a means (250) for driving a part of a screen of the device.

7. Device according to any one of Claims 1 to 6, in which the setting means (210 to 225) is a function displayed on a screen (205) of the device and which, on selection by the user, is controlled by a microprocessor (250).

8. Device according to any one of Claims 1 to 7, in which the means (120, 250, 310, 315, 405 to 425) for limiting power transmitted by the transmitter comprises an analogue or digital "limiter" or reducer component (310, 315, 405 to 425) which intervenes at the level of a power amplifier (320) of the transmitter (340).

9. Method for limiting transmission power of an equipment item comprising a radio transmitter, comprising:
- a step (550, 555) of setting a limiting value of radio power transmitted, accessible to a user and
- a step (510) of limiting power transmitted by the said radio transmitter as a function of the value chosen by the user;
**characterized in that** it comprises, furthermore:
- a step (515 to 535) of estimating an information item relating to a connectivity level associated with a power limiting value; and
- a step (520) of estimating the residual capacity for limiting the transmitted power, and
- a step (540) of displaying the said information items.

10. Computer program loadable into a computer system, the said program containing instructions allowing the implementation of the method according to Claim 9.

11. Information medium readable by a computer or a microprocessor, removable or otherwise, storing instructions of a computer program, **characterized in that** it allows the implementation of the method according to Claim 9.
